**Europäisches Patentamt**

**European Patent Office**

**Office européen des brevets**

(11) Publication number : **0 526 987 A1**

## (12) EUROPEAN PATENT APPLICATION

(21) Application number : **92306185.7**

(22) Date of filing : **06.07.92**

(51) Int. Cl.⁵ : **B01J 19/10,** B01J 19/28, B06B 3/00, C08F 255/02, B29C 47/00

(30) Priority : **08.07.91 GB 9114670**

(43) Date of publication of application :
**10.02.93 Bulletin 93/06**

(84) Designated Contracting States :
**AT BE CH DE DK ES FR GB GR IT LI LU MC NL PT SE**

(71) Applicant : **BICC Public Limited Company**
**Devonshire House Mayfair Place**
**London W1X 5FH (GB)**

(72) Inventor : **Toynbee, John**
**8 Walnut Drive, Saddlers Walk**
**Whitchurch, Shropshire SY13 1UD (GB)**
Inventor : **Thomas, David Morgan**
**Assenvej 142**
**DK-5771 Stenstrup (DK)**
Inventor : **Poole, Michael John**
**1 Barleycroft**
**Hemel Hempstead, Hertfordshire HP2 4UY (GB)**

(74) Representative : **Poole, Michael John et al**
**BICC plc Patents and Licensing Department**
**Quantum House Maylands Avenue**
**Hemel Hempstead, Herts. HP2 4SJ (GB)**

(54) **Apparatus for processing fluids especially molten polymers.**

(57) Apparatus for processing a fluid material flowing through a passageway (2) comprises at least one diaphragm (6) of flexible metallic material sealed at its periphery to and closing an aperture in a wall of the passageway. Vibrations of ultrasonic frequency are applied to an inner part of the (or each) diaphragm. The diaphragm (or each of them) may be flat or simply curved to fit the surface of the passageway but (except possibly when the fluid is very viscous or otherwise liable to impose major viscous or frictional forces on the diaphragm) it may be preferable to use a diaphragm with annular corrugations (20) enclosing the inner part of the diaphragm. Such corrugations may be circular or of other appropriate shape, and may be of any convenient profile. In particular, the corrugation profile may be such that the corrugations project equally or unequally on the two sides of the diaphragm, or even such that the corrugations may be confined to one side of the diaphragm (either the inside or the outside, depending on preferences for the influence of the diaphragm on the flow of the fluid concerned). A hydraulic or pneumatic motor (17) may be used to bias the coupling means into engagement with the diaphragm.

Fig.1

This invention relates to apparatus for processing molten polymers and other fluids (including liquid, viscous, pulverulent and pasty materials capable of flow) by exposing them to vibrations of ultrasonic frequency, say from around 15kHz to the 2MHz region.

Such exposure may be desired for a variety of reasons, including for example the promotion of chemical reactions for the modification of polymers (DE 36 17 902 and DE 36 17 903), the preparation of mixtures of polymers of relatively low compatibility and the destruction of bacterial or cellular materials in water, foodstuffs or body fluids.

At least in the processing of polymeric materials, it has been the practice to introduce vibrations into the fluid via one of the major elements of the apparatus, usually a die from which the material is being extruded. This restricts the manner, timing and extent of application of the vibrations and may present problems of potential leakage between the vibrating and stationary part of the apparatus. The present invention provides a simple and versatile alternative.

In accordance with the present invention, apparatus for processing a fluid material flowing through a passageway comprises at least one diaphragm of flexible metallic material sealed at its periphery to and closing an aperture in a wall of the said passageway and means for applying vibrations of ultrasonic frequency to an inner part of the (or each) said diaphragm.

The diaphragm (or each of them) may be flat or simply curved, preferably so as to conform to the surface of the channel in which it is mounted, but (except possibly when the fluid is very viscous or otherwise liable to impose major viscous or frictional forces on the diaphragm) it may be preferable to use a diaphragm with annular corrugations enclosing the said inner part of the diaphragm. Such corrugations may be circular or of other appropriate shape, and may be of any convenient profile. In particular, the corrugation profile may be such that the corrugations project equally or unequally from the two sides of the diaphragm, or even that the corrugations project only on one side of the diaphragm (either the inside or the outside, depending on preferences for the influence of the diaphragm on the flow of the fluid concerned). Corrugated diaphragms may also assist in ensuring adequately uniform exposure to the ultrasonic vibrations of material flowing in different parts of the passageway.

Preferably the means for applying the vibrations to the diaphragm comprises a vibration generator (such as a piezo-electric vibrator) and means for coupling it to the diaphragm. A preferred coupling means comprises an acoustic horn bearing on the inner part of the diaphragm and an acoustic booster in contact with the vibration generator and the horn and supported by fixed (pre-set) supporting means engaging the booster at a nodal position (in relation to the natural frequency of vibration of the generator). A pneumatic or hydraulic motor may be used to bias the horn or other coupling means into contact with the diaphragm. Preferably the diaphragm vibrates over a large part of its area, and this will often be best achieved by arranging the acoustic horn or other coupling means to engage the centre of the diaphragm.

One important application of the invention is in the grafting of silane reagents to polymers as a preliminary to cross-linking, where the use of ultrasonic vibrations not only allows the use of peroxides or other chemical initiators to be eliminated (offering better control of the reaction and freedom from peroxide residues), but also permits grafting to be performed at lower temperatures if desired. In this application, a threshold of vibration energy per unit volume of polymer melt may have to be exceeded before grafting is observed.

Depending on the geometry of the passageway and of the diaphragm, it may or may not be practicable to ensure sensibly uniform exposure to the ultrasonic vibrations of polymer or other fluid flowing in different parts of the passage cross-section; when it is not practicable to do this, a suitable mixer may be incorporated in the apparatus downstream of the diaphragm to reduce any non-uniformity. The mixer might range from an array of pins extending across the passageway to an independently powered cavity-transfer mixer.

The invention will be further described, by way of example, with reference to the accompanying drawings in which:

figure 1 is a diagrammatic cross-section of one form of apparatus in accordance with the invention;
figure 2 is a plan view of the characteristic part of the apparatus of figure 1;
figure 3 is an enlarged (but still diagrammatic) cross-section of a detail of the apparatus;
figure 4 is a view, corrresponding to figure 1, of a modified form of apparatus; and
figures 5-12 show alternative corrugation arrangements.

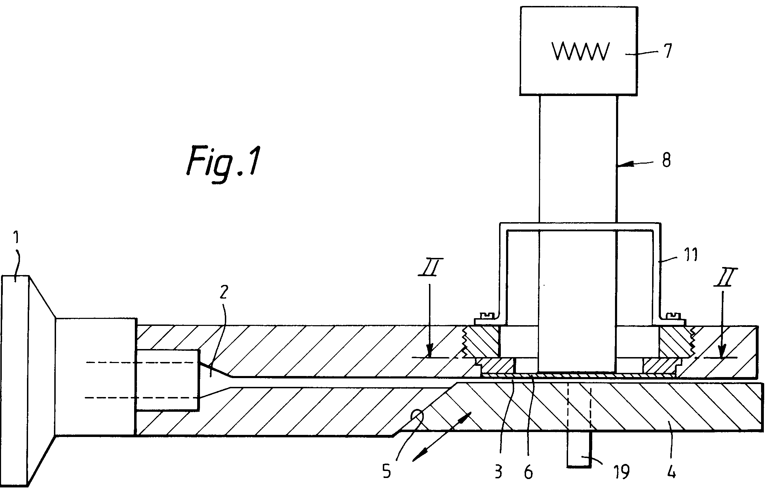

Figure 1 shows apparatus for mounting on an extruder to promote, say, a grafting reaction in the molten polymer-based material emerging from the extruder (not shown, to the left of the figure). The apparatus has a flange 1 for mounting on the extruder in place of the usual die head or cross-head and a passageway 2 for flow of the polymer-based material extending to and including a part 3 in which the passageway is bounded by two flat surfaces that are relatively close together. From the part 3 the passageway may continue, if desired through an auxiliary mixer, to an extrusion die, a granulator or other apparatus as the particular application requires.

One of the surfaces bounding the passageway in the part 3 is formed by an auxiliary member 4 which is adjustable by sliding at the inclined interface 5 to adjust the spacing between the two surfaces.

In an aperture in one of these passageway-bounding surfaces is mounted a diaphragm 6 of beryllium copper or other flexible metal. The diaphragm is suitably sealed at its periphery to the edges of the aperture (as further described shortly) and a piezo-electric vibration generator 7 is coupled to its centre by coupling means 8.

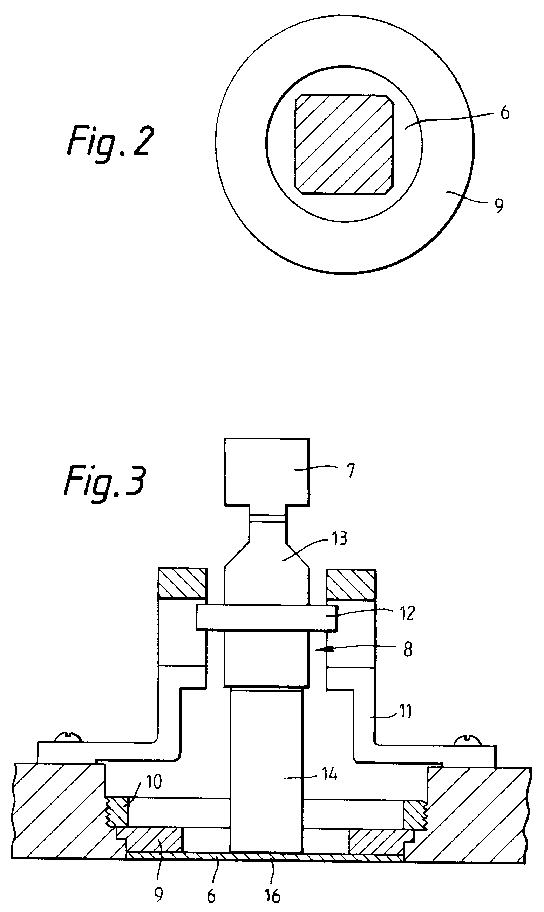

As best seen in figures 2 and 3, the diaphragm 6 is fixed (e.g. by welding) to a stepped ring 9 which engages a shoulder in the wall of the aperture to ensure that the inside of the diaphragm is substantially flush with the inner face of the member 2 bounding the passageway 3 and is fixed in position by a threaded ring 10. An adjustable fixed support 11 is mounted over the aperture in member 2 and holds a disc 12 that engages an acoustic booster 13 which couples piezoelectric vibrator 7 to acoustic horn 14 and thus to the centre 16 of diaphragm 6. The disc 12 engages the booster 13 at a node of the applied vibration, so as to avoid damping it by coupling it to the rigid parts of the apparatus.

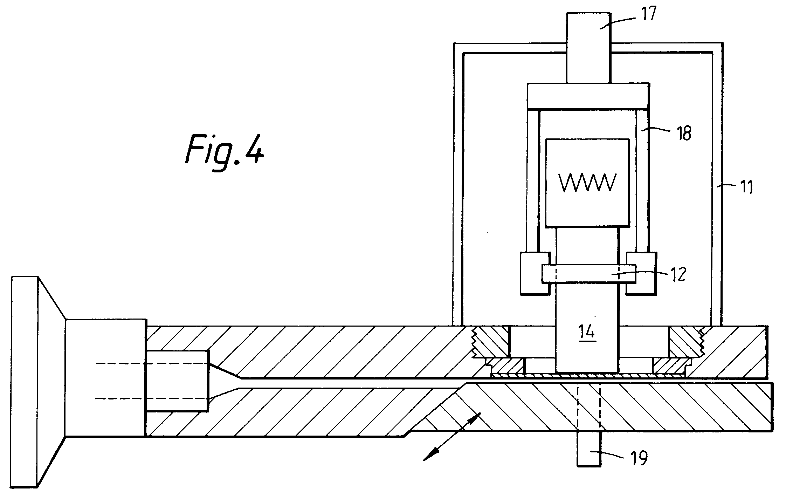

In the apparatus of Figure 4, the support 11 is modified to support a hydraulic piston-and-cylinder motor 17 which, when actuated, acts on a cage 18 which supports the disc 12 so that an adjustable biassing force can be readily applied to the horn 14.

In either of these forms of apparatus, appropriate instrumental probes 19 may be provided for observing temperatures, pressures and other relevant variables; pressure transducers may have band-pass filters associated with them to enable the extraction of mean pressure, vibration amplitude, or both of these. In the apparatus of figure 4, the measured mean pressure may be input to a servo-control to regulate the action of the hydraulic motor.

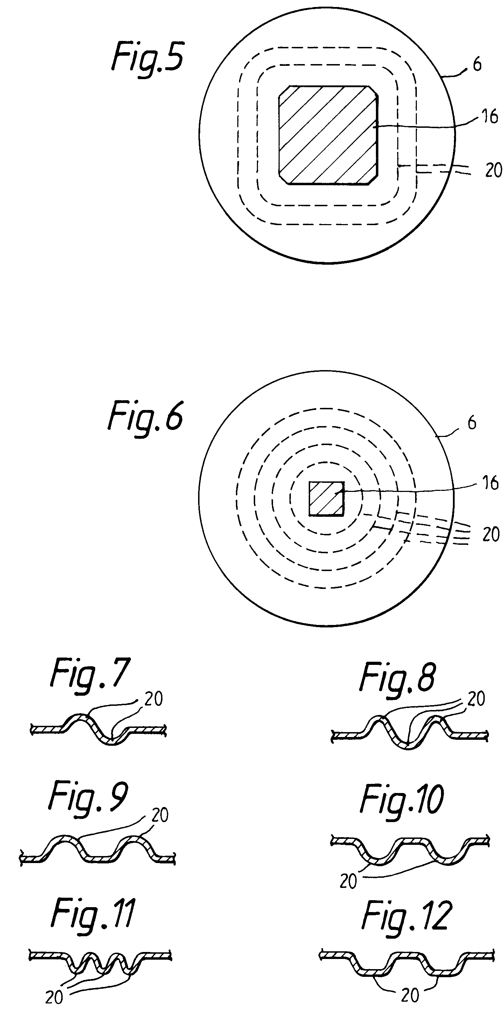

In the apparatus of figures 1 to 4, the diaphragm 6 is flat, so as to have the least possible effect on the flow of the polymeric material. Unless this is a major consideration, we prefer to use diaphragms (figures 5-12) that have annular corrugations 20 surrounding their inner parts 16 where the vibrations are applied, in order to increase flexibility and reduce fatigue. Such annular corrugations may be circular or non-circular (figures 5 and 6) to suit the shape of the inner part 16 engaged by the coupling means (8, 14). They may also be of any appropriate profile, including for example symmetrical undulations (figures 7 and 8), profiles formed by ribs projecting inwards (figure 9) or outwards (figure 10) from an otherwise flat diaphragm, angular profiles (figure 11) and profiles with flat-bottomed ribs (figure 12).

In an example of the application of the invention to a grafting reaction, 1000 parts (by weight) of granular polyethylene of Melt Flow index 0.2 (Sold by BP Chemicals Ltd under the designation BPD2133) was tumble-mixed for 10 minutes with 16 parts of vinyl trimethoxy silane and 1 part of dibutyltin dilaurate and then extruded in a Betol "mini" laboratory extruder fitted with the apparatus shown in figures 1-3. The first temperature zone of the extruder was maintained at 70°C and the other zones (including the apparatus shown in the figures) at 150°C. This may be compared with a temperature of 230°C commonly used for peroxide-initiated grafting of the same materials. The extruder was run at a variety of screw speeds from 10 to 100 rpm, and the piezoelectric vibration generator at various power levels, as detailed in the Table below. The output of the extruder was measured, and thus the vibrational energy input per kg of material computed; the gel content of the product after crosslinking by exposure for 24 hours to water at 60°C was determined by standard procedures as a measure of the degree of cross-linking achieved. Most of the runs were replicated, and results are reported individually.

TABLE

| run no. | screw speed (rpm) | output kg/sx10$^4$ | power W | energy MJ/kg | gel content (%) |
|---|---|---|---|---|---|
| 1 | 20 | 0.72 | 90-120 | 1.24-1.65 | 3,3 |
| 2 | 42 | 1.46 | 378 | 2.59 | 67,67 |
| 3 | 42 | 1.46 | 190-252 | 1.29-1.72 | 1,1 |
| 4 | 60 | 2.06 | 120 | 0.58 | 4,4 |
| 5 | 60 | 2.06 | 60 | 0.29 | 1,1 |
| 6 | 68 | 2.32 | 312 | 1.34 | 0,1,74,75, 68,78,76,53 |
| 7 | 78 | 2.66 | 585 | 2.20 | 76,28,75,62 |
| 8 | 100 | 3.40 | 60-90 | 0.18-0.26 | 1,1 |
| 9 | 100 | 3.40 | 360 | 1.06 | 1,1,1,1 |
| 10 | 100 | 3.40 | 1050-1200 | 3.09-3.53 | 62,55 |
| 11 | 100 | 3.40 | 750 | 2.21 | 73,75 |
| 12 | 42 | 1.63 | 831.6 | 5.1 | 76,74 |
| 13 | 100 | 3.75 | 3000 | 8.0 | 80,86 |
| 14 | 20 | 2.28 | 342 | 1.5 | 79,78 |
| 15 | 20 | 0.85 | 252 | 2.96 | 59,72 |
| 16 | 20 | 3.75 | 132 | 0.35 | 21,22 |
| 17 | 60 | 3.75 | 1782 | 4.75 | 67,76 |
| 18 | 60 | 3.75 | 1494 | 3.98 | 70,79 |
| 19 | 52 | 2.56 | 1186 | 4.63 | 69,74 |
| 20 | 42 | 1.63 | 832 | 5.10 | 64,70 |
| 21 | 20 | 2.28 | 174 | 0.76 | 51,53 |
| 22 | 100 | 3.75 | 3000 | 8.00 | 62,52 |
| 23 | 78 | 2.92 | 1825 | 6.25 | 54,62 |
| 24 | 52 | 2.56 | 936 | 3.66 | 73,73 |

From the table it can be seen that, for this particular composition and apparatus under these conditions, an energy input of at least about 1.8 MJ/kg is necessary for consistent grafting and subsequent crosslinking to occur, though it may be observed at lower inputs. The reason for these inconsistent observations at low vibration energy has not been determined; it may be due to small variations in conditions (e.g. in temperature) affecting the distribution of vibrational energy through the volume of the polymer or to imprecise measurements

4

in relation to a sharp threshold effect.

## Claims

1. Apparatus for processing a fluid material flowing through a passageway comprising at least one diaphragm of flexible metallic material sealed at its periphery to and closing an aperture in a wall of the said passageway and means for applying vibrations of ultrasonic frequency to an inner part of the (or each) said diaphragm.

2 Apparatus as claimed in claim 1 in which the diaphragm has annular corrugations enclosing the said inner part of the diaphragm.

3 Apparatus as claimed in claim 2 in which the said corrugations are circular.

4 Apparatus as claimed in claim 2 or claim 3 in which the corrugation profile is such that the corrugations project equally from the two faces of the diaphragm.

5 Apparatus as claimed in claim 2 or claim 3 in which the corrugations project only on one side of the diaphragm.

6 Apparatus as claimed in any one of the preceding claims in which the said means for applying the vibrations to the diaphragm comprises a vibration generator and means for coupling it to the diaphragm.

7 Apparatus as claimed in claim 6 in which the part of the diaphragm to which the vibrations are coupled is its centre.

8 Apparatus as claimed in claim 7 in which the said coupling means comprises an acoustic horn bearing on the inner part of the diaphragm and an acoustic booster in contact with the vibration generator and the horn and supported by fixed supporting means engaging the booster at a nodal position.

9 Apparatus as claimed in any one of Claims 6-8 in which the coupling means is urged into engagement with the diaphragm by a hydraulic or pneumatic motor.

Fig.1

EP 0 526 987 A1

Fig.2

Fig.3

Fig.4

EP 0 526 987 A1

Fig.5

Fig.6

Fig.7

Fig.8

Fig.9

Fig.10

Fig.11

Fig.12

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 826 740 (W.R. JEWETT)<br>* column 5, line 64 - column 6, line 6; figure 8 *<br>--- | 1-9 | B01J19/10<br>B01J19/28<br>B06B3/00<br>C08F255/02<br>B29C47/00 |
| P,A | US-A-5 039 462 (R.J. CHILKO)<br>* column 4, line 50 - line 58; figure 1 *<br>--- | 1 | |
| A | US-A-3 325 386 (P.A.W. JURSCHEWITZ)<br>* column 4, line 35 - line 58; figure 3 *<br>--- | 1 | |
| P,A | EP-A-0 488 097 (EURATOM)<br>* column 2, line 14 - line 23; figure 1 *<br>--- | 1 | |
| A | GB-A-1 179 827 (SOCALTRA)<br>* page 2, left column, line 7 - line 30; figure 1 *<br>--- | 1 | |
| A | US-A-4 540 113 (M. SHIMAZAKI)<br>* column 3, line 57 - column 4, line 43; figures 4-7 *<br>--- | 6-9 | |
| A | DE-A-3 925 788 (MITSUBISHI)<br>* column 3, line 2 - line 44; figures *<br>--- | 6-9 | TECHNICAL FIELDS SEARCHED (Int. Cl.5 ) |
| A | FR-A-1 513 303 (ROBERT BOSCH)<br>* page 1, right column, line 3 - line 18; figures 1,2 *<br>--- | 2-4,7 | B01J<br>B06B<br>C08F<br>B29C<br>G10K |
| A | CH-A-103 919 (C.B. LENTHAL)<br>* page 1, left column, line 17 - line 22; figures 2,3 *<br>----- | 5 | C02F<br>A23L |

The present search report has been drawn up for all claims

| Place of search | Date of completion of the search | Examiner |
|---|---|---|
| THE HAGUE | 23 OCTOBER 1992 | TOPALIDIS A. |